# EUROPEAN PATENT APPLICATION

(11) **EP 3 153 972 A1**
(43) Date of publication of application: **12.04.2017**
(21) Application number: 16192340.4
(22) Date of filing: 05.10.2016
(51) Int. Cl.: G06F 12/0802, G06F 12/0862

(54) **DATA MANAGEMENT PROGRAM, DATA MANAGEMENT DEVICE, AND DATA MANAGEMENT METHOD**

(30) Priority: 06.10.2015 JP 2015198377
(71) Applicant: FUJITSU LIMITED, Kawasaki-shi Kanagawa 211-8588 (JP)
(72) Inventor: Saeki, Toshiaki, Kanagawa, 211-8588 (JP)
(74) Representative: Hoffmann Eitle

(57) **Abstract**

A data management method including obtaining access history information indicating an order of latest access for each of the plurality of data groups, an upper limit of total data size being set for the plurality of data groups, each of the plurality of data groups being cached in a memory when any data included in each of the data group is accessed, estimating a plurality of frequencies for each of a plurality of assumed memory sizes, each of the plurality of frequencies indicating a frequency of cases that data to be accessed is not stored in a memory which has an assumed memory size, specifying a minimum memory size satisfying a requirement, determining whether increasing the upper limit is allowed or not based on the minimum memory size and a memory size of the memory, and increasing the upper limit in accordance with a result of the determining.

## Description

### FIELD

The embodiment discussed herein is related to a data management program, a data management device, and a data management method.

### BACKGROUND

A storage device has a low throughput for an irregular access to data of a small size, and a random access cost higher than a sequential access cost. This throughput is improved by a cache technology.

The cache technology is a technology for shortening a processing time using a memory when a control device having a fast processing speed reads data from a low-speed recording device faster. When the control device reads data from the low-speed recording device, the read data is temporarily stored in the memory and may be read from the memory, which is capable of reading and writing faster than a hard disk.

Examples of the cache technology include the least recently used (LRU) cache technology. In the basic algorithm of the LRU cache technology, when a high-speed recording device (for example, a cache memory) having a small capacity becomes full, data not in use for a longest time among data stored therein is stored in a low-speed recording device (for example, a main recording device) having a large capacity. With the algorithm of the LRU cache technology, advantageous effects may be obtained without knowledge of the logic of an application program, but only when the same data is repeatedly accessed in a short duration (while being stored in the cache). The duration of the life of data in the cache depends on the amount of the cache memory, and this technology has no effect on repeated accesses in a cycle exceeding the duration of the life in the cache.

When a large amount of data exceeding the capacity of the memory is processed, an access to a disk frequently occurs, which largely degrades data processing performance.

In one cache technology (hereinafter referred to as a data rearrangement technology), related data is collected an identical segment and rearranged based on an access history (for example, International Publication Pamphlet No. WO 2013/114538).

The related techniques are disclosed in, for example, Japanese Laid-open Patent Publication Nos. 2008-59438 and 2008-510258.

### SUMMARY

According to an aspect of the invention, a data management program that causes a computer to execute a process, the process including obtaining access history information in response to each of accesses for data included in any one of a plurality of data groups, the access history information indicating an order of latest access for each of the plurality of data groups at a timing of the access for the data, an upper limit of total data size being set for the plurality of data groups, each of the plurality of data groups being cached in a memory when any data included in each of the data group is accessed, estimating a plurality of frequencies for each of a plurality of assumed memory sizes, each of the plurality of frequencies indicating a frequency of cases that data to be accessed is not stored in a memory which has an assumed memory size, specifying a minimum memory size satisfying a requirement that a corresponding frequency is equal to or less than a predetermined value among form the plurality of assumed memory sizes, the corresponding frequency being one of the plurality of frequencies corresponding to the minimum memory size, determining whether increasing the upper limit of total data size is allowed or not based on the minimum memory size and a memory size of the memory, and increasing the upper limit in accordance with a result of the determining when it is determined that increasing the upper limit of total data size is allowed.

### BRIEF DESCRIPTION OF DRAWINGS

FIGs. 1A and 1B are diagrams for describing generation of thrashing based on limitation on a memory capacity in a data rearrangement technology;
FIG. 2 is a diagram for describing an exemplary application of the present embodiment;
FIG. 3 illustrates an exemplary data management device in the present embodiment;
FIG. 4 illustrates an exemplary hardware configuration of the data management device in the present embodiment;
FIG. 5 illustrates an exemplary functional configuration of the data management device in the present embodiment;
FIG. 6 illustrates an exemplary virtual LRU queue in the present embodiment;
FIG. 7 illustrates exemplary access history information in the present embodiment;
FIG. 8 is a diagram for describing estimation of a performance change for an average group size based on the virtual LRU queue in the present embodiment;
FIG. 9 illustrates a process executed by a group access monitoring unit in the present embodiment;
FIG. 10 illustrates a process of generating a memory amount-random access generation amount graph by a thrashing generation determination unit in the present embodiment;
FIG. 11 illustrates a determination processing process executed by the thrashing generation determination unit in the present embodiment;
FIG. 12 illustrates an exemplary functional configuration of a data management device in the present embodiment (modification);
FIG. 13 illustrates exemplary access history information in the present embodiment (modification);
FIG. 14 illustrates a process executed by the group access monitoring unit in the present embodiment (modification); and
FIG. 15 illustrates the determination processing process executed by the thrashing generation determination unit in the present embodiment (modification).

### DESCRIPTION OF EMBODIMENT

A data rearrangement technology performs grouping of related data based on an access pattern, and reading and writing of grouped data from and to a disk device in units of grouped data.

Since a larger amount of related data is read onto a cache by prefetching as a group size increases, reading at the following access is more likely to be performed from the cache, thereby achieving an improved access performance. In this manner, in the data rearrangement technology, the effect of prefetching is obtained as the group size increases.

However, there is an upper limit on a memory amount that a target system may hold in a cache. Thus, the number of groups stored in the cache decreases in some cases as the group size increases, and performance degradation (thrashing) is caused by frequent occurrence of cache misses.

In some data rearrangement methods, when the group size is increased, it is unable to determine whether the effect of prefetching or the performance degradation caused by the frequent occurrence of cache misses will occur due to the increase of the group size.

As an aspect of the present disclosure, it is an object of a disclosed embodiment to determine whether the performance degradation is caused by grouping of related data.

In the data rearrangement technology, a control unit of a computer dynamically performs grouping of related data based on an access pattern and stores the grouped data in contiguous regions on a storage. When accessing data, the control unit prefetches, from the storage, not only target data but also data of a whole group to which the target data belongs, and caches those pieces of data in a memory. When data as an access target belongs to a cached group, an access to the storage may be skipped. When the memory amount becomes insufficient, a group to which no access is made for a longer duration is sequentially written back to a disk. The writing back of data to the disk is performed in the LRU method in units of groups.

Accordingly, data access performance is improved by prefetching when the group size is increased. As a result, the effect of prefetching leads to reduction in a random access cost, thereby achieving an improved throughput.

Accesses to a whole group are achieved by a single random access. A sequential access cost increases because a group has a size larger than that of a single piece of data, but is negligible as compared to the random access cost. An advantageous effect may be obtained when a plurality of pieces of data belonging to the same group are accessed while the group is stored in a cache. Similarly to the LRU, the cache is effective when the same data is repeatedly accessed.

In the data rearrangement technology, the effect of prefetching is varied by factors such as a group size and data grouping. The effect of prefetching increases when the group size becomes large. In the data grouping, the hit rate of prefetching changes depending on which data is input to a group.

In the data rearrangement technology, the effect of caching is varied by a factor such as the number of groups stored in the memory. The effect of caching increases as the number of groups stored in the memory increases. However, the effect is typically not improved further once the number of groups reaches at a certain number. Hereinafter, the number of groups stored in the memory is referred to as "the number of group caches".

A larger amount of the memory is consumed for a large group size. The group size and the number of group caches have a relation therebetween as follows.

the number of group caches < total memory amount / group size average

It is clear from the above relational expression that, when one of the group size and the number of group caches is increased, the other requests to be reduced.

In the data rearrangement technology, the effect of prefetching is obtained by an increase in the group size. On the other hand, since there is an upper limit on a memory amount that a target system may store in a cache, the number of groups stored in the cache decreases, and the performance degradation (thrashing) potentially occurs due to the frequent occurrence of cache misses.

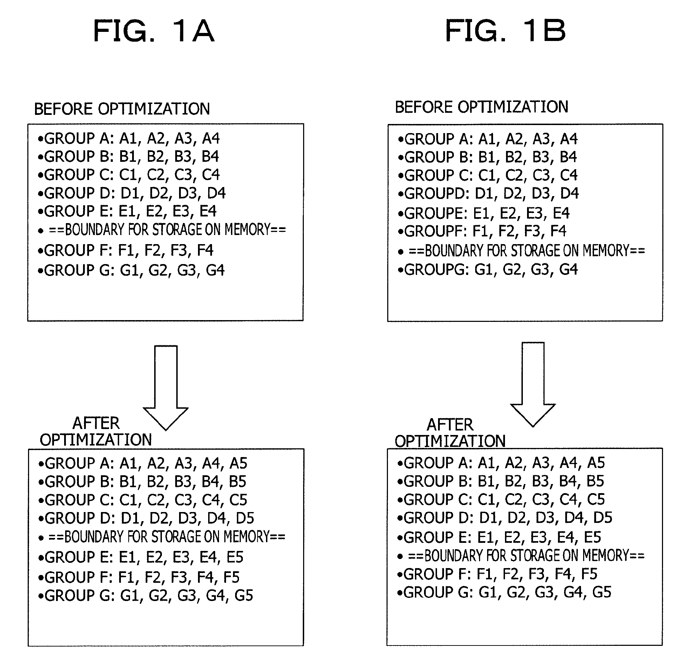

In the conventional data rearrangement technology, when the group size is increased, it is unable to determine whether the effect of prefetching due to the increase in the group size or the performance degradation due to the frequent occurrence of cache misses caused by the increase in the group size is stronger. This will be described below with reference to FIGs. 1A and 1B.

FIGs. 1A and 1B are diagrams for describing generation of thrashing based on limitation on a memory capacity in the data rearrangement technology. It is assumed that data has an identical size. It is assumed that access threads have a thread parallelism (the number of parallel access threads) of five, accessing groups A to E.

In a system that includes a memory having a capacity for storing therein 20 pieces of data at maximum, as illustrated in "before optimization" in FIG. 1A, it is assumed that the memory stores therein a total of 20 pieces of data included in groups A to D. Group A includes data of A1, A2, A3, and A4. Group B includes data of B1, B2, B3, and B4. Group C includes data of C1, C2, C3, and C4. Group D includes data of D1, D2, D3, and D4. Group E includes data of E1, E2, E3, and E4.

Group F (F1, F2, F3, and F4) and group G (G1, G2, G3, and G4) are not stored in the memory due to the limitation on the memory capacity.

In a system that includes a memory having a capacity for storing therein 25 pieces of data at maximum, as illustrated in "before optimization" in FIG. 1B, it is assumed that the memory stores therein a total of 24 pieces of data included in groups A to F. Group A includes data of A1, A2, A3, and A4. Group B includes data of B1, B2, B3, and B4. Group C includes data of C1, C2, C3, and C4. Group D includes data of D1, D2, D3, and D4. Group E includes data of E1, E2, E3, and E4. Group F includes data of F1, F2, F3, and F4.

Group G (G1, G2, G3, and G4) is not stored in the memory due to the limitation on the memory amount.

Then, it is assumed that the size of each group is grown by the data rearrangement technology, so that each group has five pieces of data.

In the system that includes the memory having a capacity for storing therein 20 pieces of data at maximum, as illustrated in "after optimization" in FIG. 1A, groups A to D (20 pieces of data) are still stored in the memory, but group E is popped out from the memory and stored in a disk due to the limitation on the data capacity.

In this case, since the five threads access groups A to E, any one of groups A to D is removed from the memory upon an access to group E.

Repetition of this phenomenon frequently generates thrashing, so that the improvement of the performance by the data rearrangement technology is maycelled out.

In contrast, in the system that includes the memory having a capacity for storing therein 25 pieces of data at maximum, there is such an excess memory capacity that the five groups are stored in the memory (cache) as illustrated in "after optimization" in FIG. 1B.

In this case, no thrashing is generated when the five threads access groups A to E, thereby improving the performance of prefetching.

In order to suppress the generation of thrashing, the growth of the group size is suppressed so as to maintain the number of group caches at which no thrashing is generated. In the example in FIG. 1A, the group size is maintained at four or less in the system in which the memory having a capacity for the 20 pieces of data is mounted.

However, the data rearrangement technology does not consider the limitation on the memory amount nor a condition of generation of thrashing. Thus, it is difficult to be determined whether to suppress the growth of the group size.

In the present embodiment, in a data system that includes a plurality of data groups obtained by grouping related data, part of data being loaded onto the memory, and is configured to respond to an external access request, a computer performs a process described below. Specifically, the computer calculates an allowable limit memory amount at which generation of an access request (random access) to target data not included in the memory is allowable from the grouping state of each data in the data system and an access history to individual data of the data system. The allowable limit memory amount is also a memory amount at which a random access request abruptly increases. The computer determines the possibility of an increase in the group size of a particular data group based on the allowable limit memory amount and an available memory amount of the system.

In the present embodiment, for a change in the performance in response to a change in the number of groups stored in the memory, the allowable limit memory amount is measured in a simple manner using the virtual LRU queue managed on an assumption that all groups are stored in the memory.

In the present embodiment, the effect of prefetching and the effect (phenomenon) of thrashing in response to an increase in the group size are compared in strength.

The present embodiment is applicable to data in the system grouped according to any rule. For example, in the data rearrangement technology, data is grouped based on an access history, but the present disclosure is not particularly limited thereto, and data may be grouped based on other information.

This allows determination of whether the effect (phenomenon) of an abrupt increase of thrashing is caused by an increase in an average group size in a system in which related data is grouped.

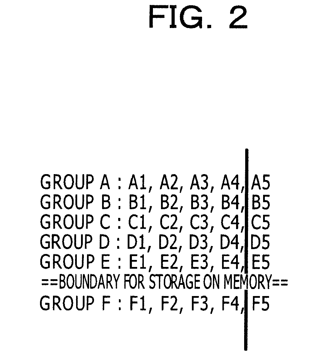

FIG. 2 is a diagram for describing an exemplary application of the present embodiment. In the example in FIG. 2, it is assumed that five threads each access groups A to E in a system that includes a memory having a capacity for storing therein 25 pieces of data at maximum. In this case, when the number of group caches becomes below five, the system is in an allowable limit state in which thrashing is generated and the performance abruptly degrades. This state is detected using the virtual LRU queue. Thus, it is determined using the virtual LRU queue to be described later that the performance abruptly degrades when the sum of the sizes of all groups on the memory are below the current cache size, in other words, the average group size is larger than that in the allowable limit state.

When the allowable limit state for the performance degradation is detected, the growth of the average group size is suppressed so that the group size in the state is not to be exceeded, thereby suppressing the performance degradation due to generation of thrashing.

The following describes the present embodiment in detail.

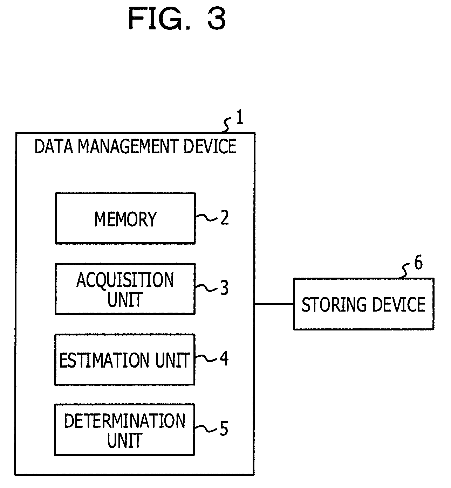

FIG. 3 illustrates an exemplary data management device in the present embodiment. A data management device 1 includes a memory 2, an acquisition unit 3, an estimation unit 4, and a determination unit 5.

Data of a group including data corresponding to an access request is loaded from a storing device 6 and arranged on the memory 2. The memory 2 is, for example, a memory 13. The storing device 6 stores therein data of a plurality of groups grouped in accordance with a relation among data. The storing device 6 is, for example, a storage device 14.

The acquisition unit 3 acquires first access history information including access orders and data sizes of groups accessed in a predetermined duration. The acquisition unit 3 is, for example, a thrashing generation determination unit 28.

The estimation unit 4 estimates, for each of a plurality of virtual capacities obtained by virtually changing the capacity of a memory in a plurality of stages, a first rearrangement group set that represents a set of groups arranged in the memory having the virtual capacity from the first access history information. The estimation unit 4 is, for example, the thrashing generation determination unit 28.

The determination unit 5 determines the possibility of an increase in the data size of any group based on a change in the number of occurrences of an event that the first rearrangement group set does not include data corresponding to an access request in response to a virtual change of a memory capacity in a predetermined duration. The determination unit 5 is, for example, the thrashing generation determination unit 28.

The determination unit 5 performs a process described below based on a change in the number of occurrences of the event that the first rearrangement group set does not include data corresponding to an access request in response to a virtual change of the memory capacity in a predetermined duration, and a changed virtual capacity of the memory in the range of the physical capacity of the memory. Specifically, the determination unit 5 determines the possibility of an increase in the data size of any group.

With such a configuration, it may be determined whether, in a system in which related data is grouped, an increase in a data group size is allowable without causing performance degradation of the system.

The determination unit 5 may determine the possibility of an increase in the data size of any group based on a virtual capacity when the number of occurrences of the event becomes smaller than a threshold in response to a change in the virtual capacity of the memory in the range of the physical capacity of the memory. The determination unit 5 may calculate a curve of a change in the number of occurrences of the event in response to a change in the virtual capacity of the memory in the range of the physical capacity of the memory, and determine the possibility of an increase in the data size of any group based on a virtual capacity corresponding to an inflection point of the curve.

The determination unit 5 may determine that the size of any group difficult to be increased when the sum of the data sizes of groups arranged in the memory is larger than a virtual capacity when the number of occurrences of the event becomes smaller than the threshold. The determination unit 5 may determine that the size of any group difficult to be increased when the sum of the sizes of groups arranged in the memory is larger than a virtual capacity corresponding to an inflection point of a curve. Such a configuration may suppress increase in the sizes of groups.

The acquisition unit 3 further acquires second access history information including the access orders and the sizes of groups virtually accessed in response to the access request in a predetermined duration. The average of the data sizes of the groups included in the second access history information is larger than the average of the data sizes of the groups included in the first access history information.

The estimation unit 4 estimates, for each of a plurality of virtual capacities obtained by virtually changing the capacity of the memory in a plurality of stages, a second rearrangement group set that represents a set of groups arranged in the memory having the virtual capacity from the second access history information.

The determination unit 5 determines that an increase in the group size is allowable based on a first change, a second change, the average of the data sizes of the groups included in the second access history information. The first change is a change in the number of occurrences of an event that the second rearrangement group set does not include data corresponding to an access request in response to a virtual change of the memory capacity in a predetermined duration. The second change is a change in the number of occurrences of the event that the first rearrangement group set does not include data corresponding to the access request in response to a virtual change of the memory capacity in the predetermined duration.

With such a configuration, a comparison between the degree of improvement of the effect of prefetching and the performance degradation due to an increase in a random access generation amount caused by an increase in the average group size may be performed between the groups based on the first access history information and the groups based on the second access history information. Accordingly, it may be determined that an increase in the average group size is allowable if the performance of the system is further improved with the arrangement of groups based on the second access history information.

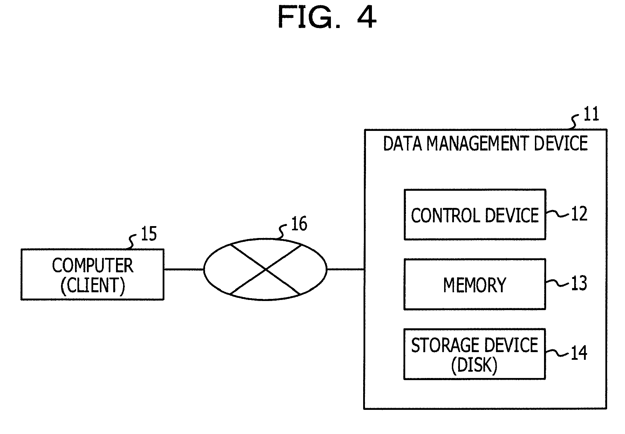

FIG. 4 illustrates an exemplary hardware configuration of the data management device in the present embodiment. A data management device 11 includes, for example, a control device 12, a memory device (hereinafter referred to as a "memory") 13, and the storage device 14. The data management device 11 is connected with a client computer (hereinafter referred to as a "client") 15 as an exemplary information processing device through a communication network (hereinafter referred to as a "network") 16.

The control device 12 is a processor such as a central processing unit (CPU) as an arithmetic processing device including, for example, a program counter, a command decoder, various calculators, a load store unit (LSU), and a general register.

The memory 13 is a storage device that allows faster access than the storage device 14. The memory 13 is, for example, a random access memory (RAM) or a flash memory. The storage device 14 is, for example, a disk device such as a hard disk drive (HDD) having a lower access speed than that of the memory 13.

The storage device 14 stores therein data provided by the data management device 11 in units of groups. As an example of the present embodiment, a group is a set of data estimated to have a relation based on a history of a request (hereinafter referred to as an access request) to access data, and the content of the data is updated through processing by the control device 12 as described later. The access request includes a read access request and a write access request. As an example of the present embodiment, the data is grouped based on the history as described above access, but the present disclosure is not limited thereto, and the data may be grouped based on any other information.

The memory 13 stores therein, for example, a group highly frequently accessed among groups stored in the storage device 14, which is read from the storage device 14. Accordingly, the data management device 11 may output data fast in response to an input access request.

The data management device 11 includes, for example, a ROM storing therein a Basic Input/Output System (BIOS) and a program memory in addition to the above-described configuration. A computer program executed by the control device 12 may be acquired through the network 16, or by a computer-readable mobile recording medium, such as a mobile memory device or a CD-ROM, mounted on the data management device 11.

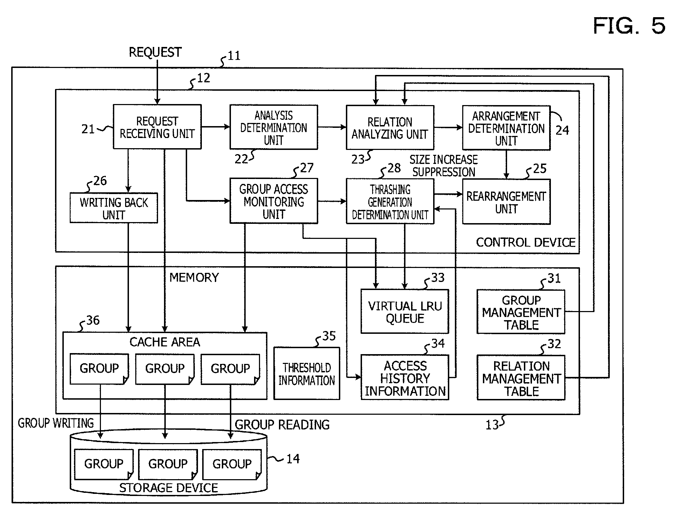

FIG. 5 illustrates an exemplary functional configuration of the data management device in the present embodiment. As described above, the data management device 11 includes the control device 12, the memory 13, and the storage device 14. The memory 13 includes a region (hereinafter referred to as a "cache region") 36 that caches a plurality of segments read from the storage device 14 and temporarily stores the segments. When the capacity of the cache region 36 is insufficient, any data group is extracted from the cache region 36 and written back to the storage device 14 by using an algorithm such as the LRU method or a least frequently used (LFU) method.

The memory 13 stores therein a group management table 31, a relation management table 32, a virtual LRU queue, an access history information 34, and threshold information 35. The group management table 31 stores therein information indicating a correspondence relation between a key for specifying data and a group to which this data belongs. The relation management table 32 sequentially stores each data specified by a request in association with data specified by the previous request, and manages accumulated information of the association.

The virtual LRU queue 33 manages accessed groups, including any group popped out from the cache region 36, in order of latest access. The threshold information 35 includes a threshold used in the present embodiment.

The control device 12 executes the computer program according to the present embodiment to serve as a request receiving unit 21, an analysis determination unit 22, a relation analyzing unit 23, an arrangement determination unit 24, a rearrangement unit 25, a writing back unit 26, a group access monitoring unit 27, and the thrashing generation determination unit 28.

The request receiving unit 21 searches the memory 13 in response to a request input from a requester such as a client 15, further searches the storage device 14 if the memory 13 does not include a record specified by the request, and then transmits the record specified by the request to the requester. The request is transmitted not only from the client 15, but also from a process executed at the data management device 11 or any other agent. Alternatively, when an input and output device is connected with the data management device 11, the request is input by a user through the input and output device.

When the request is input, the request receiving unit 21 first searches the memory 13 for data specified by the request. If the memory 13 includes the data specified by the request, the request receiving unit 21 reads this data from the memory 13 and replies the data to the requester.

If the memory 13 does not include the data specified by the request, the request receiving unit 21 searches the storage device 14 for the data specified by the request. If the storage device 14 includes the data specified by the request, the request receiving unit 21 reads, from the storage device 14 using the group management table 31, all pieces of data included in a group to which the data specified by the request belongs. Then, the request receiving unit 21 replies the data specified by the request among all pieces of data included in this read group to the requester. Simultaneously, the request receiving unit 21 stores all pieces of data included in the read group in the memory 13.

In the above description, the request receiving unit 21 performs the processing of storing all pieces of data included in a group read from the storage device 14 in the memory 13, at a timing when the request is received. However, the present disclosure is not limited thereto. For example, the request receiving unit 21 may acquire an access frequency in a certain duration, and prioritize reading of a group having a high access frequency from the storage device 14 and storing thereof in the memory 13.

The analysis determination unit 22 determines whether the relation analyzing unit 23 performs a relation analysis by determining whether data specified by contiguous requests belong to an identical group using the relation management table 32.

The relation analyzing unit 23 analyzes a relation each data in a group to which data specified by the current request belongs and each data in a group to which data specified by the previous request belongs based on the relation management table 32 depending on a determination result by the analysis determination unit 22. The rearrangement unit 25 performs determination of a group to which data belongs based on this analysis result.

The rearrangement unit 25 updates the arrangement of groups in the group management table 31 in which the determination by the relation analyzing unit 23.

If the capacity of the cache region 36 becomes insufficient, the writing back unit 26 executes writing back processing of writing any group not stored in the cache region 36 back to the storage device 14 based on an instruction from the request receiving unit 21.

The group access monitoring unit 27 monitors access to any group stored in the memory 13 and the storage device 14, and updates the virtual LRU queue 33 and the access history information 34 at each generation of an access to a group.

The thrashing generation determination unit 28 generates a graph (virtual memory amount-random access generation amount graph) illustrating a relation between a virtual memory amount and a random access generation amount based on the virtual LRU queue 33 and the access history information 34. The thrashing generation determination unit 28 specifies the virtual memory amount (allowable limit memory amount) at which the random access generation amount is below the threshold based on the generated virtual memory amount-random access generation amount graph. Specifically, the thrashing generation determination unit 28 calculates and records the random access generation amount for each virtual memory amount at each unit time. As a result, the thrashing generation determination unit 28 determines whether the memory amount is currently insufficient, in other words, the performance is currently degraded due to an insufficient number of group caches.

The random access generation amount indicates the amount of accesses to data out of the cache region 36 in a certain duration in the past when the memory amount is virtually changed.

Having determined that the number of group caches is insufficient, the thrashing generation determination unit 28 issues, to the rearrangement unit 25, a size increase suppression notification to suppress further growth of the group size.

Having received the size increase suppression notification, the rearrangement unit 25 updates the arrangement of groups in the group management table 31 to such an extent that the average group size does not increase.

The growth suppression of the group size may be performed on all or part of groups.

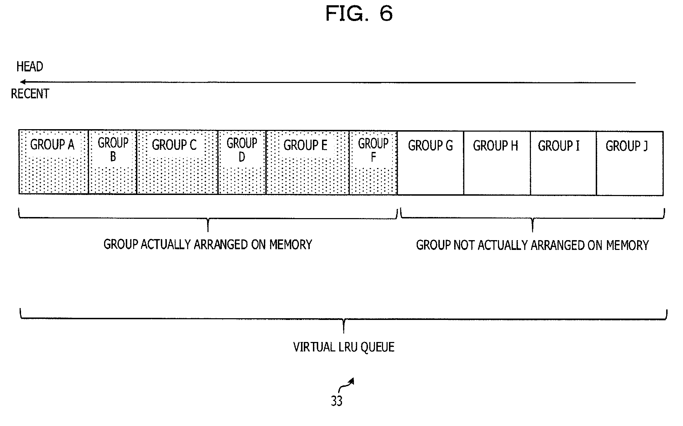

FIG. 6 illustrates an exemplary the virtual LRU queue in the present embodiment. The virtual LRU queue 33 manages accessed groups, including any group popped out from the cache region 36, on the memory 13 in order of latest access.

The virtual LRU queue 33 stores therein a history of accesses to the groups and changes the order of pieces of information stored in the virtual LRU queue 33 at each access to a group. Leading parts of the actual LRU queue and the virtual LRU queue 33 are identical to each other.

The left end in FIG. 6 is the head of the virtual LRU queue 33. The virtual LRU queue 33 stores therein information for specifying a group more recently accessed from the right side toward the left side in FIG. 6.

In FIG. 6, groups A to F are groups actually arranged on the memory 13. Groups G to J are groups not actually arranged on the memory (groups arranged only on the storage device 14).

The amount of accesses (the random access generation amount) to data out of the cache region 36 in a certain duration in the past when the memory amount is virtually changed may be estimated from the virtual LRU queue 33.

If the group size is frequently changed, the virtual LRU queue 33 may store therein the sizes of groups in addition to the order of the groups.

If the group size is not frequently changed, the current group size is used to perform the following calculation.

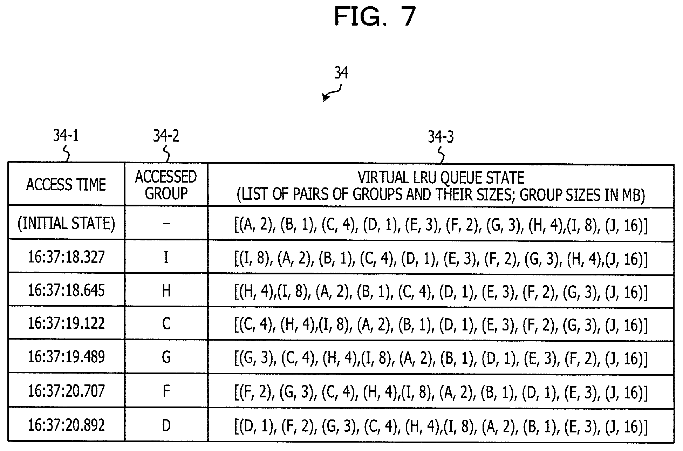

FIG. 7 illustrates exemplary access history information in the present embodiment. The access history information 34 stores therein access information for a certain duration in the past and previous access information (initial state), which are used for estimation of an optimum group size.

The access history information 34 includes data items of "access time" 34-1, "accessed group" 34-2, and "virtual LRU queue state" 34-3. The item "access time" 34-1 stores therein a time at which a group is accessed. The item "accessed group" 34-2 stores therein a group name for specifying a group accessed at a corresponding access time.

The item "virtual LRU queue state" 34-3 stores therein the state of the virtual LRU queue 33. Specifically, the item "virtual LRU queue state" 34-3 stores therein a pair of a group name and the size (or the number of pieces of data) of a group indicated by this group name, in a descending order of an accessed time. The unit of the group size is "MB (megabyte)".

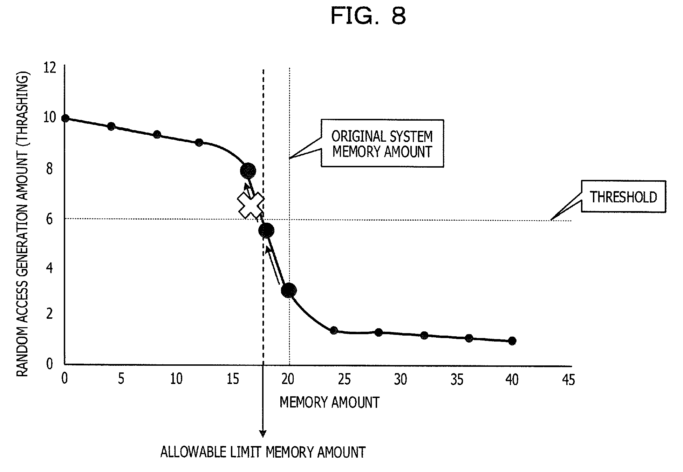

FIG. 8 is a diagram for describing estimation of a performance change for an average group size based on the virtual LRU queue in the present embodiment. The use of the virtual LRU queue 33 allows acquisition of the virtual memory amount-random access generation amount graph of an LRU performance change (which is approximated by the reciprocal of the random access generation amount) when the memory amount of the system (which difficult to be changed in reality) is changed. The average group size is the average of the sizes of all groups managed by the virtual LRU queue 33.

A change in the random access generation amount in response to a change in the average group size, and a change in the random access generation amount in response to a change in the memory amount are not identical to each other, but both indicate the effect of caching and thus may be treated as approximate values.

When the random access generation amount for an original system memory amount is below the threshold but the random access generation amount for a lower virtual memory amount exceeds the threshold, it is estimated that the average group size and the performance are currently balanced.

It is estimated from the virtual memory amount-random access generation amount graph that the random access generation amount abruptly increases (thrashing is generated) for a lower virtual memory amount (in other words, a larger average group size). The virtual memory amount in this state is referred to as an optimum memory amount. However, the allowable limit memory requests to be within the capacity of the system memory (physical memory).

In the case of FIG. 8, the original system memory amount is 20, and the threshold of the random access generation amount stored in the threshold information 35 is 6. In this case, a memory amount below 17.5 leads to a random access generation amount exceeding the threshold. Thus, the optimum memory amount is 17.5.

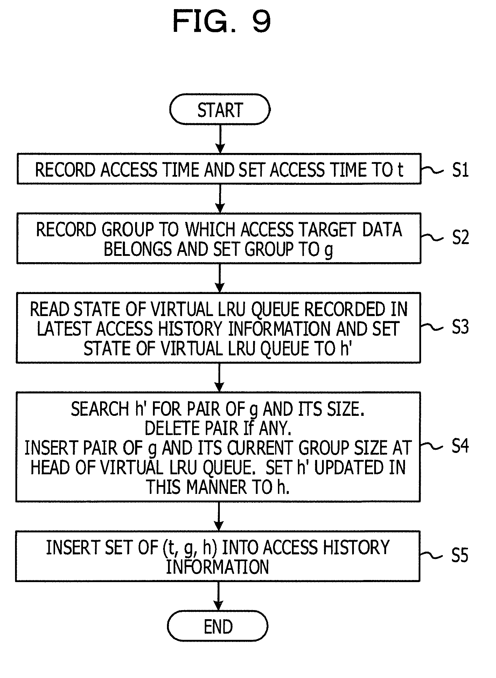

FIG. 9 illustrates a process executed by the group access monitoring unit in the present embodiment. the group access monitoring unit 27 executes the process in FIG. 9 at each access to data specified by a request.

The group access monitoring unit 27 records an access time when there is an access to data specified by a request, and sets the access time to t (S1).

The group access monitoring unit 27 specifies a group to which data as an access target belongs from the group management table 31, records this group as an access target, and sets the group to g (S2).

The group access monitoring unit 27 reads the state of the virtual LRU queue 33 recorded in the access history information 34 storing therein a latest access history, and sets the state of the virtual LRU queue 33 to h' (S3).

The group access monitoring unit 27 searches h' for a pair of g and the size thereof. If h' includes a pair of g and the size thereof, the group access monitoring unit 27 deletes this pair from h'. Then, the group access monitoring unit 27 inserts a pair of g and the current group size thereof at the head of the virtual LRU queue in h'. The group access monitoring unit 27 sets h' updated in this manner to h (S4).

The group access monitoring unit 27 inserts a set of (t, g, h) into the access history information 34 (S5).

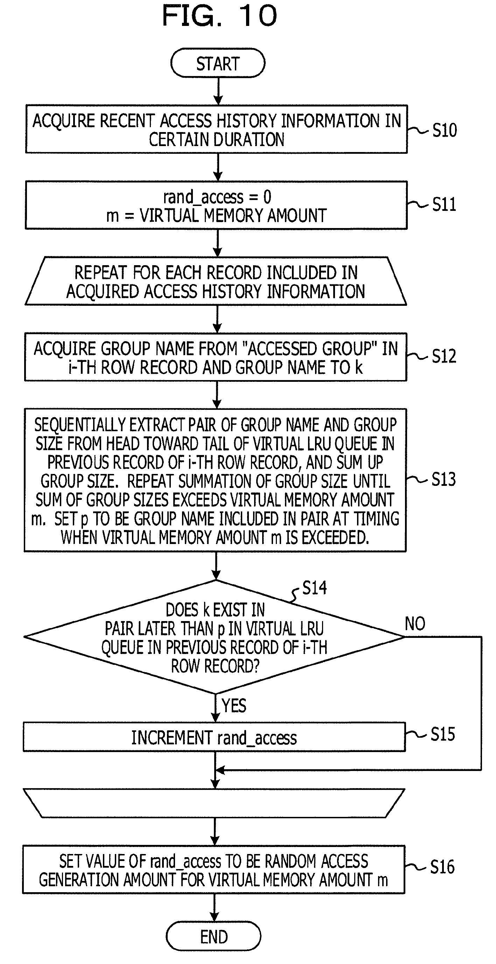

FIG. 10 illustrates a process of generating the memory amount-random access generation amount graph by the thrashing generation determination unit in the present embodiment. The thrashing generation determination unit 28 executes the process in FIG. 10 on each virtual memory amount producing a point on the memory amount-random access generation amount graph.

For example, when the random access generation amount is estimated to produce the virtual memory amount-random access generation amount graph for virtual memory amounts of 1 MB, 2 MB, 3 MB, ..., 16 MB, the process in FIG. 10 is executed once for each virtual memory amount.

The thrashing generation determination unit 28 acquires recent access history information in a certain duration (S10).

The thrashing generation determination unit 28 sets a virtual memory amount (for example, 1 MB, 2 MB, 3 MB, ..., 16 MB) to m. The thrashing generation determination unit 28 initializes, to zero, a parameter rand_access for estimating the random access generation amount (S11).

Next, the thrashing generation determination unit 28 performs, in the access history information 34, the processing at S12 to S15 on all records (n records, where n is an arbitrary integer) included in the acquired access history information.

First, the thrashing generation determination unit 28 acquires a group name from the item "accessed group" 34-2 in a record on the i-th row (i is an arbitrary integer of 0 < i ≤ n) of the access history information 34, and sets the group name to k (S12).

The thrashing generation determination unit 28 sequentially extracts a pair of the group name and the group size from the head toward the tail of the virtual LRU queue in "the virtual LRU queue state" 34-3 in the previous record of the record on the i-th row, and sums up the group size. The thrashing generation determination unit 28 repeats the summation of the group size until the sum of the group sizes exceeds the virtual memory amount m. The thrashing generation determination unit 28 sets p to be a group name included in a pair at a timing when the virtual memory amount m is exceeded (S13). The pair at the timing when the virtual memory amount m is exceeded includes such a group X that the value of m is smaller than the sum of the sizes when the summation is performed up to the group X, and the value of m is larger than the sum of the sizes when the summation is performed up to a group X-1 right before the group X.

The thrashing generation determination unit 28 determines whether k exists in a pair later than p in the virtual LRU queue in "the virtual LRU queue state" 34-3 in the previous record of the record on the i-th row (S14).

If k exists in a pair later than p in the virtual LRU queue 33 in the previous record of the record on the i-th row ("YES" at S14), the thrashing generation determination unit 28 increments the value of rand_access (S15).

If the processing at S12 to S15 is completed for all of the recent history (n records) in a certain duration, the value of rand_access is the random access generation amount for the virtual memory amount m (S16).

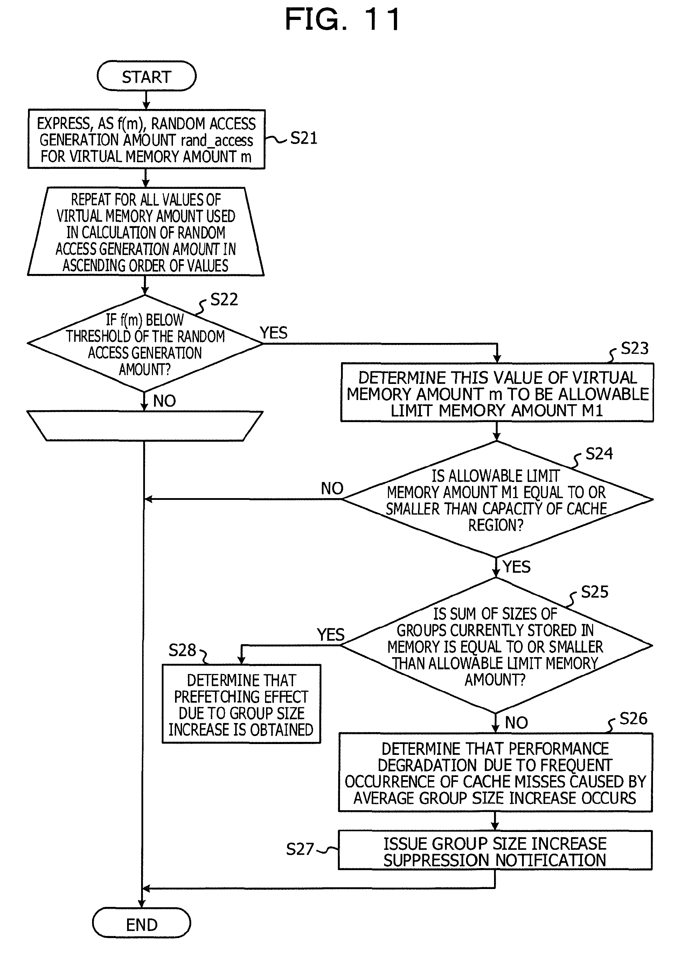

FIG. 11 illustrates a determination processing process executed by the thrashing generation determination unit in the present embodiment. The thrashing generation determination unit 28 expresses, as f(m), the random access generation amount rand_access for the virtual memory amount m (S21).

Next, the thrashing generation determination unit 28 determine whether f(m) is below the threshold of the random access generation amount for all values of the virtual memory amount m obtained through the calculation of the random access generation amount in FIG. 10 in ascending order of the values, (S22). If f(m) is not below the threshold of the random access generation amount ("NO" at S22), the thrashing generation determination unit 28 performs the processing at S22 for the next smallest value of the virtual memory amount m.

If f(m) is below the threshold of the random access generation amount ("YES" at S22), the thrashing generation determination unit 28 determines this value of the virtual memory amount m to be a memory amount corresponding to the threshold of the random access generation amount, in other words, an allowable limit memory amount M1 (S23).

The thrashing generation determination unit 28 determines whether the allowable limit memory amount M1 is equal to or smaller than the capacity of the cache region 36 (S24). If the allowable limit memory amount M1 is larger than the capacity of the cache region 36 ("NO" at S24), the present process ends.

If the allowable limit memory amount M1 is equal to or smaller than the capacity of the cache region 36 ("YES" at S24), the thrashing generation determination unit 28 determines whether the sum of the sizes of groups currently stored in the memory is equal to or smaller than the allowable limit memory amount (S25).

If the sum of the sizes of all groups currently stored in the memory are equal to or smaller than the capacity of the cache region 36 ("YES" at S25), the thrashing generation determination unit 28 performs a process described below. Specifically, the thrashing generation determination unit 28 determines that the effect of prefetching due to an increase in the average group size is obtained when the average group size is increased (S28), and then the present process ends.

If the sum of the sizes of all groups stored in the memory are larger than the capacity of the cache region 36 ("NO" at S25), the thrashing generation determination unit 28 performs a process described below. Specifically, the thrashing generation determination unit 28 determines that the performance degradation due to the frequent occurrence of cache misses caused by an increase in the average group size occurs when the average group size is further increased (S26). In this case, the thrashing generation determination unit 28 issues the group the size increase suppression notification to the rearrangement unit 25 (S27).

If f(m) is not below the threshold of the random access generation amount for all values of the virtual memory amount m obtained in calculation of the random access generation amount in FIG. 10, the process in FIG. 11 ends.

According to the present embodiment, it may be determined whether an effect (phenomenon) due to an abrupt increase of thrashing is caused by an increase in an average group size in a system in which related data is grouped. If it is determined that the effect (phenomenon) due to an abrupt increase of thrashing is caused by an increase in the average group size, the increase in the average group size may be suppressed.

In the specification of an allowable limit memory amount, in the example in FIG. 11, the allowable limit memory amount is specified based on the threshold, but the present disclosure is not limited thereto. For example, a change curve (including an approximate curve) (corresponding to curve indicated by the graph in FIG. 8) may be calculated from the random access generation amount for a virtual memory amount used in the calculation of the random access generation amount (FIG. 10), the allowable limit memory may be set to be an inflection point of this change curve.

The following describes a modification of the above-described embodiment. In the modification, assume that new data is input to a group to calculate the degree of improvement of the effect of prefetching when the average group size is increased accordingly. Then, the degree of improvement of the effect of prefetching is compared with the performance degradation due to an increase in the random access generation amount caused by the increase in the average group size, and it is determined that the increase in the average group size is allowable if improvement in the performance is expected.

Any configuration, function, or process identical to configurations, functions, or processes described in the above-describe embodiment is denoted by an identical reference numeral, and description thereof will be omitted.

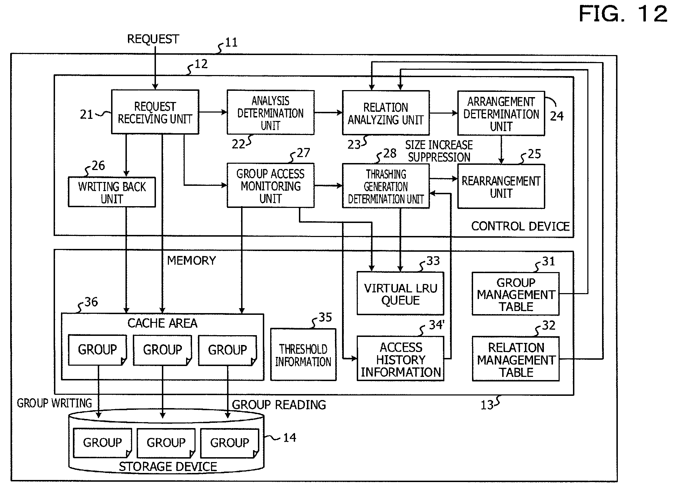

FIG. 12 illustrates an exemplary functional configuration of the data management device in the present embodiment (modification). The data management device 11 in FIG. 12 includes access history information 34' in place of the access history information 34 in the data management device 11 in FIG. 5.

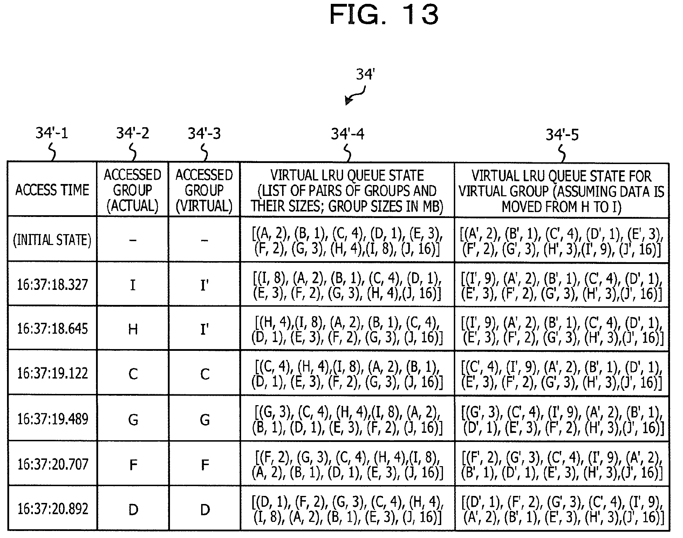

FIG. 13 illustrates exemplary access history information in the present embodiment (modification). The access history information 34' includes data items of "access time" 34'-1, "accessed group (actual)" 34'-2, "accessed groups (virtual)" 34'-3, "virtual LRU queue state" 34'-4, and "virtual LRU queue state for virtual group" 34'-5.

The item "access time" 34'-1 stores therein a time at which a group is accessed. The item "accessed group (actual)" 34'-2 storing therein a group name for specifying a group actually accessed at a corresponding access time.

The item "accessed groups (virtual)" 34'-3 stores therein a group accessed at an access time when it is assumed that data is added to a group different from a group to which the data actually belongs.

The item "virtual LRU queue state" stores therein the state of the virtual LRU queue 33. Specifically, "the virtual LRU queue state" stores therein a pair of a group name and the size (or the number of pieces of data) of a group indicated by this group name, in a descending order of an accessed time. The unit of the group size is "MB (megabyte)".

The item "virtual LRU queue state for virtual group" 34'-5 stores therein the state of the virtual LRU queue when it is assumed that data has changed a group to which the data belongs. For example, the item "virtual LRU queue state for virtual group" 34'-5 stores therein the state of the virtual LRU queue when it is assumed that data is moved from group H to group I. The size of group H' is decreased and the size of group I' is increased in the virtual LRU queue as compared to the actual virtual LRU queue.

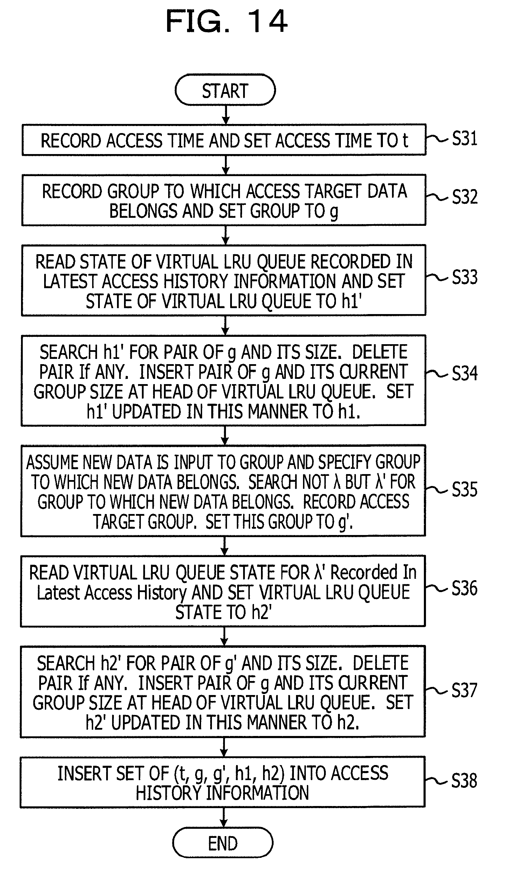

FIG. 14 illustrates a process executed by the group access monitoring unit in the present embodiment (modification). Assume that new data is input into a group. The original groups A, B, C, D, ... are denoted by λ = {A, B, C, D, ...}. Newly and virtually produced groups are denoted by λ' = {A', B', C', D', ...}. Groups A', B', C', and D' are obtained by virtually changing the number of elements (size) of each group based on the original groups A, B, C, and D.

The group access monitoring unit 27 executes the process in FIG. 14 on a virtual RLU queue of these virtual groups in parallel to the process in FIG. 9.

The group access monitoring unit 27 records an access time when there is an access to data specified by a request, and sets the access time to t (S31).

The group access monitoring unit 27 specifies a group to which data as an access target belongs from the group management table 31, and sets this group as an access target to g (S32).

The group access monitoring unit 27 reads "the virtual LRU queue state" 34'-4 recorded in the access history information 34', and sets this "the virtual LRU queue state" 34'-4 to h1' (S33).

The group access monitoring unit 27 searches h1' for a pair of g and the size thereof. If h1' includes a pair of g and the size thereof, the group access monitoring unit 27 deletes this pair from h1'. Then, the group access monitoring unit 27 inserts a pair of g and the current group size thereof at the head of the virtual LRU queue in h1'. The group access monitoring unit 27 sets h1' updated in this manner to hi (S34).

The group access monitoring unit 27 specifies the group to which data as an access target belongs at S32. Specifically, the group access monitoring unit 27 searches not λ but λ' for the group to be specified. The group access monitoring unit 27 records the group searched from λ', and sets this group to g' (S35).

The group access monitoring unit 27 reads "the virtual LRU queue state for virtual group" 34'-5 recorded in a latest record of the access history information 34', and sets this "the virtual LRU queue state for virtual group" 34'-5 to h2' (S36).

The group access monitoring unit 27 searches h2' for a pair of g' and the size thereof. If h2' includes a pair of g' and the size thereof, the group access monitoring unit 27 deletes this pair from h2'. Then, the group access monitoring unit 27 inserts a pair of g' and the current group size at the head the virtual LRU queue 33. The group access monitoring unit 27 sets h2' updated in this manner to h2 (S37).

The group access monitoring unit 27 inserts a set of (t, g, g', h1, h2) into the access history information 34' (S38).

Using the access history information 34' obtained in this manner, the thrashing generation determination unit 28 executes the process in FIG. 10 on each virtual memory amount producing a point on the virtual memory amount-random access generation amount graph.

In the above description of FIG. 10, "accessed group" 34-2 and "the virtual LRU queue state" 34-3 are used. In the modification, however, "accessed groups (virtual)" 34'-3 and "the virtual LRU queue state for virtual group" 34'-5 are used. As a result, the thrashing generation determination unit 28 acquires a random access generation amount rand_access' for each virtual memory amount m.

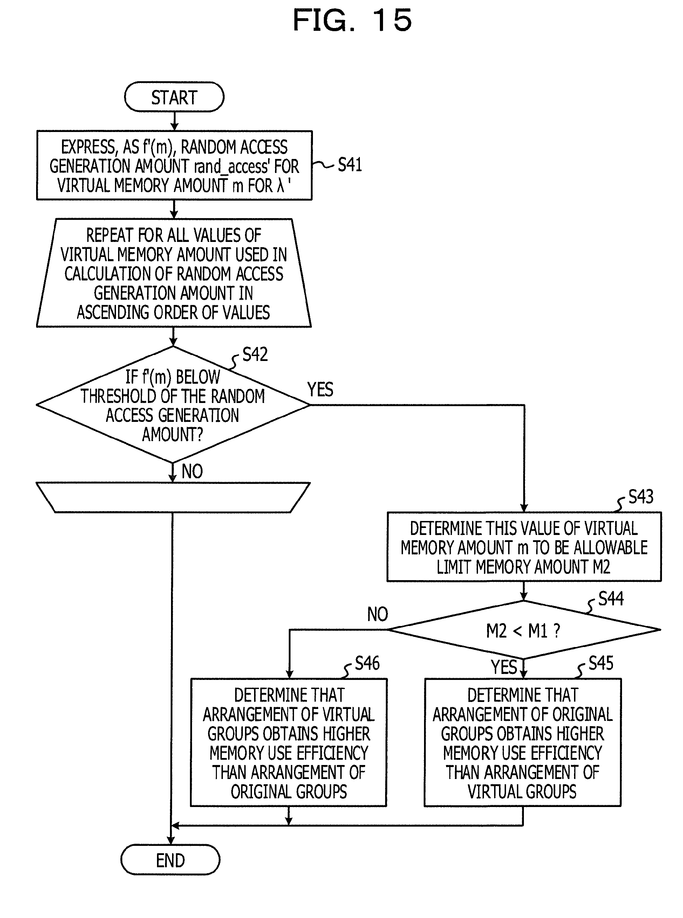

FIG. 15 illustrates the determination processing process executed by the thrashing generation determination unit in the present embodiment (modification). The thrashing generation determination unit 28 expresses, as f'(m), the random access generation amount rand_access' for the virtual memory amount m (S41).

Next, the thrashing generation determination unit 28 determines whether f'(m) is below the threshold of the random access generation amount for all values of the virtual memory amount m obtained through the calculation of the random access generation amount in FIG. 10 in ascending order of the values (S42). If f'(m) is not below the threshold of the random access generation amount ("NO" at S42), the thrashing generation determination unit 28 performs the processing at S42 for the next smallest value of the virtual memory amount m.

If f(m) is below the threshold of the random access generation amount ("YES" at S42), the thrashing generation determination unit 28 determines this value of the virtual memory amount m to be a memory amount corresponding to the threshold of the random access generation amount, in other words, an allowable limit memory amount M2 (S43).

The thrashing generation determination unit 28 compares the allowable limit memory amount for actual groups and the allowable limit memory amount for virtual groups. In this comparison, the thrashing generation determination unit 28 determines whether the allowable limit memory amount M2 is smaller than the allowable limit memory amount M1 calculated in FIG. 11 (S44).

If the allowable limit memory amount M2 is smaller than the allowable limit memory amount M1 calculated in FIG. 11 ("YES" at S44), the thrashing generation determination unit 28 determines that the arrangement of the virtual groups obtains a higher memory use efficiency than that of the arrangement of the original groups (S45). In other words, when the group size is virtually increased, a larger amount of related data is stored in the memory by prefetching, thereby improving the performance (hit rate) of access to the data on the memory, in other words, improving the effect of prefetching. In this case, the thrashing generation determination unit 28 may determine that an increase in the group size is allowable based on the average of the sizes of the virtual groups.

If the allowable limit memory amount M2 is equal to or larger than the allowable limit memory amount M1 calculated in FIG. 11 ("NO" at S44), the thrashing generation determination unit 28 determines that the arrangement of the original groups obtains a higher memory use efficiency than that of the arrangement of the virtual groups (S46). In this case, the thrashing generation determination unit 28 may determine that an increase in the group size is allowable based on the average of the sizes of the original groups.

If f'(m) is not below the threshold of the random access generation amount for all values of the virtual memory amount m obtained through the calculation of the random access generation amount in FIG. 10 as a result of repeating the processing at S42 for the values, the process in FIG. 15 ends.

For example, the thrashing generation determination unit 28 may output the determination results at S45 and S46 to a display device. The thrashing generation determination unit 28 may output an instruction to increase the group size up to the average group size of the virtual groups to the rearrangement unit 25 based on the determination result at S45. The thrashing generation determination unit 28 may output an instruction to increase the group size based on the average group size of the original groups to the rearrangement unit 25 based on the determination result at S46.

As described above, in the modification, the thrashing generation determination unit 28 uses the set λ' of virtual groups to generate the virtual memory amount-random access generation amount graph when new data is input to a group (the group size is increased).

The thrashing generation determination unit 28 may measure the degree of improvement of the effect of prefetching when the group size is increased based on the virtual memory amount-random access generation amount graph.

The thrashing generation determination unit 28 detects any performance degradation due to an increase in the random access generation amount caused by an increase in the average group size based on the virtual memory amount-random access generation amount graph.

The thrashing generation determination unit 28 compares the degree of improvement of the effect of prefetching when the group size is increased and the performance degradation due to an increase in the random access generation amount based on the virtual memory amount-random access generation amount graph. If the allowable limit memory amount is small and the random access generation amount is small, it is determined that the performance is improved by the effect of prefetching. In this case, the thrashing generation determination unit 28 determines that an increase in the average group size is allowable because of a sufficient memory amount remaining.

As described above, a data management program in the present embodiment causes a computer configured to load data of a group including data corresponding to an access request onto the memory from the storing device, and respond to the access request, to execute a process described below. The storing device stores therein data of a plurality of groups grouped in accordance with a relation among data.

The computer acquires the first access history information including the access orders and the data sizes of groups accessed in a predetermined duration. The computer estimates, for each of a plurality of virtual capacities obtained by virtually changing the capacity of the memory in a plurality of stages, the first rearrangement group set that represents a set of groups arranged in the memory having the virtual capacity from the first access history information. The computer performs a process described below based on a change in the number of occurrences of an event that the first rearrangement group set does not include data corresponding to the access request in response to a virtual change of the memory capacity in a predetermined duration. Specifically, the computer estimates, from a changed virtual capacity of the memory in the range of the physical capacity of the memory, a first virtual capacity that is an allowable limit capacity above which the random access generation amount abruptly increases. The computer determines the possibility of an increase in the data size of any group based on the first virtual capacity.

In the estimation of the first virtual capacity, the computer estimates the first virtual capacity to be a virtual capacity when the number of occurrences of the event becomes smaller than a threshold in response to a change in the virtual capacity of the memory in the range of the physical capacity of the memory.

In the estimation of the first virtual capacity, the computer calculates a curve of a change in the number of occurrences of the event in response to a change in the virtual capacity of the memory in the range of the physical capacity of the memory, and estimates the first virtual capacity to be a virtual capacity corresponding to an inflection point of the curve.

In the above-described determination, the computer determines that the data size of any group difficult to be increased if the sum of the data sizes of a set of groups arranged in the memory is larger than the first virtual capacity.

The computer further acquires the second access history information including the access orders and the data sizes of groups virtually accessed in response to an access request in a predetermined duration. The average of the sizes of the groups included in the second access history information is different from the average of the data sizes of the groups included in the first access history information. The computer estimates, for each of a plurality of virtual capacities obtained by virtually changing the capacity of the memory in a plurality of stages, the second rearrangement group set that represents a set of groups arranged in the memory having the virtual capacity from the second access history information. The computer performs a process described below based on a change in the number of occurrences of an event that the second rearrangement group set does not include data corresponding to an access request in response to a virtual change of the memory capacity in a predetermined duration. Specifically, the computer estimates, from a changed virtual capacity of the memory in the range of the physical capacity of the memory, a second virtual capacity that is an allowable limit capacity above which the random access generation amount abruptly increases. The computer determines that an increase in a group data size is allowable based on the average of the data sizes of the groups included in the second access history information if the second virtual capacity is smaller than the first virtual capacity.

## Claims

1. A data management program that causes a computer to execute a process, the process comprising:
obtaining access history information in response to each of accesses for data included in any one of a plurality of data groups, the access history information indicating an order of latest access for each of the plurality of data groups at a timing of the access for the data, an upper limit of total data size being set for the plurality of data groups, each of the plurality of data groups being cached in a memory when any data included in each of the data group is accessed;
estimating a plurality of frequencies for each of a plurality of assumed memory sizes, each of the plurality of frequencies indicating a frequency of cases that data to be accessed is not stored in a memory which has an assumed memory size;
specifying a minimum memory size satisfying a requirement that a corresponding frequency is equal to or less than a predetermined value among form the plurality of assumed memory sizes, the corresponding frequency being one of the plurality of frequencies corresponding to the minimum memory size;
determining whether increasing the upper limit of total data size is allowed or not based on the minimum memory size and a memory size of the memory; and
increasing the upper limit in accordance with a result of the determining when it is determined that increasing the upper limit of total data size is allowed.

2. The data management program according to claim 1, wherein the process further comprises:
specifying a specified memory size by calculating a curve of a change in the frequency of the cases in response to a change in the assumed memory size in a range of the memory size of the memory, the specified memory size corresponding to an inflection point of the curve; and
determining whether increasing the upper limit of total data size is allowed or not based on the specified memory size and a memory size of the memory.

3. The data management program according to claim 1 or 2, wherein
it is determined, in the determining, that increasing the upper limit of total data size is not allowed when the total data size of the plurality of data groups stored in the memory is smaller than the minimum memory size.

4. The data management program according to any one of claim 1 to 3, wherein the process further comprises:
obtaining second access history information corresponding to virtually access for a plurality of virtual data groups whose upper limit of total data size is different from the upper limit for the plurality of data groups, the second access history information indicating an order of latest access for each of the plurality of virtual data groups;
estimating a plurality of second frequencies corresponding to the plurality of virtual data groups for each of the plurality of assumed memory sizes, each of the plurality of second frequencies indicating a frequency of cases that data to be accessed is not stored in a memory which has an assumed memory size; and
determining that increasing the upper limit of total data size is allowed when the plurality of second frequencies indicates less frequencies than the plurality of frequencies.

5. A data management device comprising:
an obtaining unit that obtains access history information in response to each of accesses for data included in any one of a plurality of data groups, the access history information indicating an order of latest access for each of the plurality of data groups at a timing of the access for the data, an upper limit of total data size being set for the plurality of data groups, each of the plurality of data groups being cached in the memory when any data included in each of the data group is accessed;
an estimation unit that estimates a plurality of frequencies for each of a plurality of assumed memory sizes, each of the plurality of frequencies indicating a frequency of cases that data to be accessed is not stored in a memory which has an assumed memory size;
a specifying unit that specifies a minimum memory size satisfying a requirement that a corresponding frequency is equal to or less than a predetermined value among form the plurality of assumed memory sizes, the corresponding frequency being one of the plurality of frequencies corresponding to the minimum memory size;
a determining unit that determines whether increasing the upper limit of total data size is allowed or not based on the minimum memory size and a memory size of the memory; and
an increasing unit that increases the upper limit in accordance with a result of the determining when it is determined that increasing the upper limit of total data size is allowed.

6. A data management method executed by a computer, the data management method comprising:
obtaining access history information in response to each of accesses for data included in any one of a plurality of data groups, the access history information indicating an order of latest access for each of the plurality of data groups at a timing of the access for the data, an upper limit of total data size being set for the plurality of data groups, each of the plurality of data groups being cached in a memory when any data included in each of the data group is accessed;
estimating a plurality of frequencies for each of a plurality of assumed memory sizes, each of the plurality of frequencies indicating a frequency of cases that data to be accessed is not stored in a memory which has an assumed memory size;
specifying a minimum memory size satisfying a requirement that a corresponding frequency is equal to or less than a predetermined value among form the plurality of assumed memory sizes, the corresponding frequency being one of the plurality of frequencies corresponding to the minimum memory size;
determining whether increasing the upper limit of total data size is allowed or not based on the minimum memory size and a memory size of the memory; and
increasing the upper limit in accordance with a result of the determining when it is determined that increasing the upper limit of total data size is allowed.
